# EUROPEAN PATENT APPLICATION

(11) **EP 4 832 142 A1**
(43) Date of publication of application: **28.10.2026**
(21) Application number: 26173534.4
(22) Date of filing: 21.04.2026
(51) Int. Cl.: H01M 10/42, H01M 10/48, H01M 50/209, H01M 50/284, H01M 50/507, H01M 50/519, H01M 50/569, H01M 50/574

(54) **BATTERY MODULE**

(30) Priority: 22.04.2025 KR 20250052646
(71) Applicant: SAMSUNG SDI CO., LTD., Yongin-si, Gyeonggi-do 17084 (KR)
(72) Inventor: AHN, Jaepil, 17084 Yongin-Si, Gyeonggi-do (KR)
(74) Representative: Gulde & Partner

(57) **Abstract**

A battery module, including a plurality of battery cells, a busbar holder on the plurality of battery cells, a plurality of busbars on the busbar holder, the plurality of busbars electrically connecting the plurality of battery cells, a flexible circuit board on the busbar holder, the flexible circuit board being electrically connected to the plurality of busbars, a first coupling portion on the flexible circuit board, and a second coupling portion on the busbar, the second coupling portion being detachably coupled to the first coupling portion and electrically connected with the first coupling portion.

## Description

### BACKGROUND

### 1. Field

The present disclosure relates to a battery module.

### 2. Description of the Related Art

Unlike primary batteries that are not designed to be recharged, secondary (rechargeable) batteries are designed to be discharged and recharged. Low-capacity secondary batteries are used in portable small electronic devices such as smart phones, feature phones, notebook computers, digital cameras, and camcorders, whereas large-capacity secondary batteries are widely used as power sources for driving motors in hybrid vehicles and electric vehicles and for storing power (e.g., home- and utility-scale power storage). A secondary battery generally includes an electrode assembly composed of a positive electrode and a negative electrode, a case accommodating the electrode assembly, and electrode terminals connected to the electrode assembly.

The above information disclosed in this Background section is for enhancement of understanding of the background of the present disclosure, and therefore, it may contain information that does not constitute related art.

### SUMMARY

Embodiments include a battery module, including a plurality of battery cells, a busbar holder on the plurality of battery cells, a plurality of busbars on the busbar holder, the plurality of busbars electrically connecting the plurality of battery cells, a flexible circuit board on the busbar holder, the flexible circuit board being electrically connected to the plurality of busbars, a first coupling portion on the flexible circuit board, and a second coupling portion on the busbar, the second coupling portion being detachably coupled to the first coupling portion and electrically connected with the first coupling portion.

The first coupling portion may include a first base portion coupled to the flexible circuit board, and an insertion portion extending from the first base portion, the insertion portion being inserted into the second coupling portion to be electrically connected to the second coupling portion. This facilitates assembly and maintenance.

The first coupling portion may further include a first bridge portion between the first base portion and the insertion portion. This enhances robustness, e.g., regarding mechanical forces.

The first bridge portion may include a first bridge body connected to the first base portion, a gripping portion extending from one side of the first bridge body, the gripping portion being bent to protrude in a direction in which the insertion portion is separated from the second coupling portion, the gripping portion extending from the insertion portion, and a support portion extending from another side of the first bridge body, the support portion being bent to protrude in a same direction as the gripping portion, coupled to the first bridge body, and supporting a side surface of the gripping portion. This enhances robustness, e.g., regarding stabilization, and/or facilitates assembly.

The support portion may further include a coupling protrusion protruding from an end of the support portion, the coupling protrusion being inserted into and coupled to a coupling groove in the first bridge body. This enhances robustness and/or facilitates assembly.

The first coupling portion may further include a first bent portion connecting the gripping portion and the insertion portion, the first bent portion being bent to protrude in a direction intersecting a direction in which the gripping portion and the insertion portion are connected. This enhances robustness, e.g., regarding mechanical forces.

The first coupling portion may further include a second bent portion connecting the first bridge body and the first base portion, the second bent portion being bent to protrude in a direction intersecting a direction in which the first bridge body and the first base portion are connected. This enhances robustness, e.g., regarding mechanical forces.

The first bridge portion may include a first bridge body connected to the first base portion, and a gripping portion extending from the first bridge body, the gripping portion protruding in a direction in which the insertion portion is separated from the second coupling portion. This enhances robustness and/or facilitates assembly.

The gripping portion may include a first bent portion extending from one side of the first bridge body, an end of the first bent portion being in the direction in which the insertion portion is separated from the second coupling portion, and extending from the insertion portion, and a second bent portion extending from another side of the first bridge body, the second bent portion being bent to protrude in a same direction as the first bent portion, the end of the first bent portion coupled by wrapping the end of the first bent portion. This enhances robustness, e.g., regarding mechanical forces.

The first coupling portion may further include a first bent portion connecting the first bent portion of the gripping portion and the insertion portion, the first bent portion of the first coupling portion being bent to protrude in a direction intersecting a direction in which the first bent portion of the gripping portion and the insertion portion are connected. This enhances robustness, e.g., regarding mechanical forces.

The second coupling portion may include a second base portion coupled to the busbar, a second bridge portion extending from the second base portion to be bent downward, and a receiving portion extending from the second bridge portion, the receiving portion receiving the first coupling portion and being electrically connected to the first coupling portion. This enhances robustness and/or facilitates assembly.

The receiving portion may include a receiving body connected to the second bridge portion, a first pressing portion extending from one side of the receiving body in a direction in which the first coupling portion is separated and bent toward an inner side of the receiving body, and a second pressing portion extending from another side of the receiving body in the direction in which the first coupling portion is separated and bent to face the first pressing portion. This enhances robustness and/or facilitates assembly.

The receiving portion may further include a first protrusion protruding from the first pressing portion toward the second pressing portion, and a second protrusion protruding from the second pressing portion toward the first pressing portion. This enhances robustness, e.g., regarding mechanical forces.

The first pressing portion may include a first slit recessed in a direction intersecting a direction in which the receiving portion extends from the second base portion, and the second pressing portion may include a second slit recessed in a direction intersecting the direction in which the receiving portion extends from the second base portion. This enhances robustness and/or facilitates assembly.

The second coupling portion may include a second base portion coupled to the busbar, an insertion portion extending from the second base portion, the insertion portion being inserted into the first coupling portion to be electrically connected to the first coupling portion, and a support protrusion extending from the second base portion, the support protrusion being inserted into a support groove in the insertion portion to support the insertion portion. This enhances robustness and/or facilitates assembly.

The first coupling portion may include a first base portion coupled to the flexible circuit board, and a receiving portion extending from the first base portion, the receiving portion receiving the second coupling portion inserted into and being electrically connected to the second coupling portion. This enhances robustness and/or facilitates assembly.

The receiving portion may include a receiving body connected to the first base portion, a first pressing portion extending from one side of the receiving body, the first pressing portion being bent into a ring shape, and a second pressing portion extending from another side of the receiving body, the second pressing portion being bent into a ring shape and facing the first pressing portion. This enhances robustness and/or facilitates assembly.

The flexible circuit board may further include a temperature sensor on the flexible circuit board, the temperature sensor being inserted into a temperature sensor receiving hole through the busbar holder, the temperature sensor being on a battery cell, and a sensor fixing portion coupled to the temperature sensor receiving hole to press and fix the temperature sensor to the battery cell. This enhances security.

The busbar holder may include a plurality of latching hooks formed around the temperature sensor receiving hole, the plurality of latching hooks being latch-fastened to the sensor fixing portion, and the sensor fixing portion may include a latching groove into which the latching hooks are latch fastened. This enhances robustness and/or facilitates assembly.

The busbar holder may further include a stopper protruding inward of the temperature sensor receiving hole, the sensor fixing portion being seated on the stopper. This enhances robustness and/or facilitates assembly.

These and other aspects and features of the present disclosure will be described in, or will be apparent from, the following description of embodiments.

However, the aspects and features of the present disclosure are not limited to those described above, and other aspects and features not mentioned will be clearly understood by a person skilled in the art from the detailed description below.

### BRIEF DESCRIPTION OF THE DRAWINGS

The accompanying drawings illustrate embodiments of the present disclosure and, together with the detailed description, further describe aspects and features of the present disclosure; therefore, the present disclosure should not be construed as being limited to the drawings.

Features will become apparent to those of ordinary skill in the art by describing in detail exemplary embodiments with reference to the attached drawings, in which:
FIG. 1 is an exploded perspective view illustrating an example of a battery module according to some embodiments of the present disclosure;
FIG. 2 is a perspective view illustrating an example of a battery cell in the battery module according to some embodiments of the present disclosure;
FIG. 3 is a plan view illustrating an example of a flexible circuit board in the battery module according to some embodiments of the present disclosure;
FIG. 4 is a perspective view illustrating an example in which a first coupling portion and a second coupling portion are coupled in the battery module according to some embodiments of the present disclosure;
FIG. 5 is a perspective view illustrating an example of the first coupling portion in the battery module according to some embodiments of the present disclosure;
FIG. 6 is a cross-sectional view illustrating an example taken along line A-A of FIG. 5;
FIG. 7 is a plan view illustrating an example of a plate for manufacturing the first coupling portion in the battery module according to some embodiments of the present disclosure;
FIG. 8 is a perspective view illustrating an example of manufacturing the first coupling portion by bending the plate in the battery module according to some embodiments of the present disclosure;
FIG. 9 illustrates an example in which a first bent portion is deformed in a first direction in the first coupling portion of the battery module according to some embodiments of the present disclosure;
FIG. 10 illustrates an example in which the first bent portion is deformed in a second direction in the first coupling portion of the battery module according to some embodiments of the present disclosure;
FIG. 11 is a perspective view illustrating an example in which a second bent portion is further formed in the first coupling portion of the battery module according to some embodiments of the present disclosure;
FIG. 12 illustrates an example in which the second bent portion is deformed in a third direction in the first coupling portion of the battery module according to some embodiments of the present disclosure;
FIG. 13 illustrates an example in which the second bent portion is deformed in the second direction in the first coupling portion of the battery module according to some embodiments of the present disclosure;
FIG. 14 is a perspective view illustrating another example of the first coupling portion in the battery module according to some embodiments of the present disclosure;
FIG. 15 is a cross-sectional view illustrating an example taken along line B-B of FIG. 14;
FIG. 16 is a perspective view illustrating an example in which the second bent portion is further formed in another example of the first coupling portion in the battery module according to some embodiments of the present disclosure;
FIG. 17 is a perspective view illustrating an example of the second coupling portion in the battery module according to some embodiments of the present disclosure;
FIG. 18 is a perspective view illustrating an example in which protrusions and slits are further formed in the second coupling portion of the battery module according to some embodiments of the present disclosure;
FIG. 19 is a cross-sectional view illustrating an example taken along line C-C of FIG. 18;
FIG. 20 is a perspective view illustrating an example in which another example of the first coupling portion and the second coupling portion are coupled in the battery module according to some embodiments of the present disclosure;
FIG. 21 is a perspective view illustrating another example of the second coupling portion in the battery module according to some embodiments of the present disclosure;
FIG. 22 is a partial side view illustrating another example of the second coupling portion in the battery module according to some embodiments of the present disclosure;
FIG. 23 is a perspective view illustrating another example of the first coupling portion in the battery module according to some embodiments of the present disclosure;
FIG. 24 is a plan view illustrating another example of the first coupling portion in the battery module according to some embodiments of the present disclosure;
FIG. 25 is a rear perspective view illustrating another example of the first coupling portion in the battery module according to some embodiments of the present disclosure;
FIG. 26 is an exploded perspective view illustrating an example in which a temperature sensor is coupled to the busbar holder in the battery module according to some embodiments of the present disclosure;
FIG. 27 is a perspective view illustrating an example in which the temperature sensor is coupled to the busbar holder in the battery module according to some embodiments of the present disclosure;
FIG. 28 is a cross-sectional view illustrating an example taken along line D-D of FIG. 27;
FIG. 29 is a rear perspective view illustrating an example in which a first stopper is provided on the busbar holder of the battery module according to some embodiments of the present disclosure; and
FIG. 30 is a rear perspective view illustrating an example in which a second stopper is additionally provided on the busbar holder of the battery module according to some embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, overcurrent protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

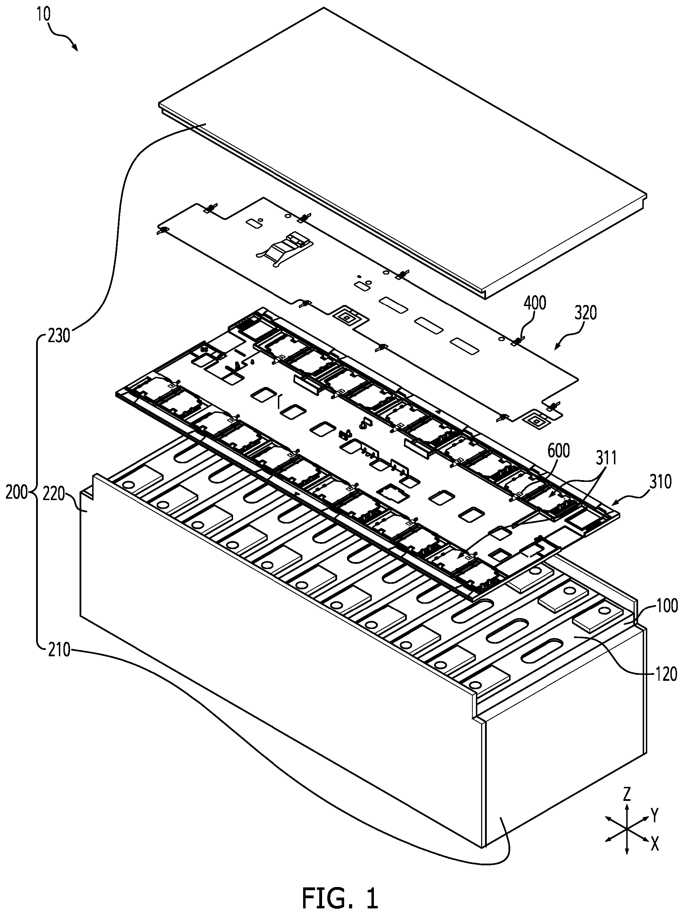

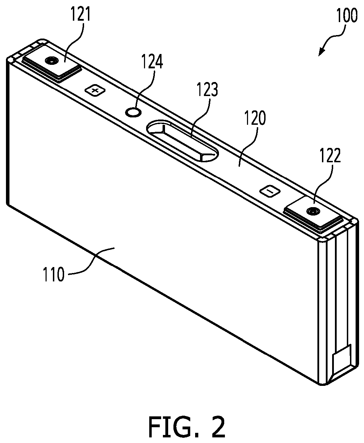

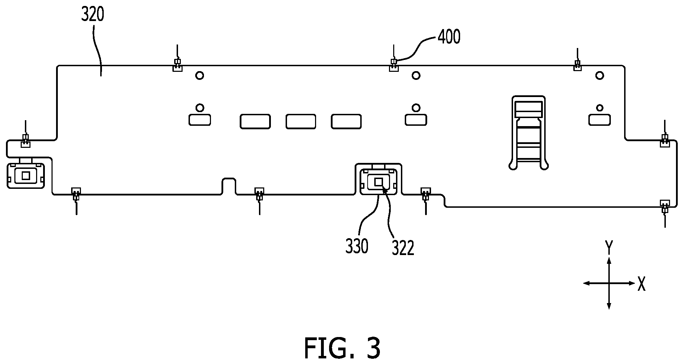

FIG. 1 is an exploded perspective view illustrating an example of a battery module according to some embodiments of the present disclosure, FIG. 2 is a perspective view illustrating an example of a battery cell in the battery module, and FIG. 3 is a plan view illustrating an example of a flexible circuit board in the battery module.

With reference to FIGS. 1-3, a battery module 10 according to some embodiments of the present disclosure may include a plurality of battery cells 100, a busbar holder 310 disposed on the plurality of battery cells 100, a plurality of busbars 311 provided on the busbar holder 310 and electrically connecting the plurality of battery cells 100, a flexible circuit board 320 disposed on the busbar holder 310 and electrically connected to the plurality of busbars 311, a first coupling portion 400 provided on the flexible circuit board 320, and a second coupling portion 600 provided on the busbar 311, the second coupling portion 600 being detachably coupled to the first coupling portion 400 and electrically connected with the first coupling portion 400.

The battery cell 100 may include at least one electrode assembly having a separator interposed between a positive electrode and a negative electrode, a case 110 accommodating the electrode assembly, and a cap assembly 120 coupled to one open side of the case 110. FIG. 2 illustrates the battery cell 100, which may be a type of secondary battery.

The positive electrode and the negative electrode may each include a collector formed of a thin metal foil and a coating portion on which an active-material layer is coated, and a non-coated region.

The electrode assembly may be formed by winding the separator between the positive electrode and the negative electrode. In other embodiments, the electrode assembly may have a stacked structure in which a plurality of sheets of the positive electrode and the negative electrode are alternately stacked with the separator interposed therebetween.

The case 110 may form an exterior appearance of the battery cell 100. The case 110 may be formed of a conductive metal such as aluminum, an aluminum alloy, or nickel-plated steel. In other embodiments, the case 110 may be formed of stainless steel (SUS). The case 110 may provide a space that accommodates the electrode assembly. FIG. 2 shows a case 110 of the prismatic type, and the battery cell 100 may, in other embodiments, be a prismatic secondary battery. However, the battery cell 100 may be prismatic, cylindrical, or pouch-type.

The cap assembly 120 may be coupled to the open side of the case 110 and may seal the case 110. The cap assembly 120 may be formed of a conductive metal identical or similar to that of the case 110. In some embodiments, the cap assembly 120 may be welded to the open side of the case 110 to seal the case 110.

The cap assembly 120 may include a positive electrode terminal 121 electrically connected to the positive electrode and a negative electrode terminal 122 electrically connected to the negative electrode. For example, the positive electrode terminal 121 and the negative electrode terminal 122 may be provided to protrude outward through the cap assembly 120.

The cap assembly 120 may include a vent portion 123. When an internal pressure inside the battery cell 100 increases above a predetermined threshold pressure, the vent portion 123 may open and may rapidly exhaust high-pressure gas to an outside of the battery cell 100.

The cap assembly 120 may include an electrolyte-injection port 124. For example, the electrolyte-injection port 124 may be a through-hole formed through the cap assembly 120. After the cap assembly 120 is coupled to the case 110, the electrolyte-injection port 124 may be formed to inject an electrolyte into an inside of the case 110. After the electrolyte is injected, the electrolyte-injection port 124 may be sealed with a sealing member.

The battery cell 100 may be a lithium battery, a sodium battery, or other type of rechargeable battery. The battery cell 100 may include any type of secondary battery that may repeatedly provide electricity by charging and discharging.

The battery module 10 may include the plurality of battery cells 100. In some embodiments, the plurality of battery cells 100 in the battery module 10 may be arranged in one direction such that wide faces thereof face each other. However, various arrangement variations are possible.

The plurality of battery cells 100 may be received in a frame 200. In some embodiments, the frame 200 may include a pair of end plates 210 disposed on outermost sides in a first direction X (the battery-cell-arrangement direction) and covering both sides of the plurality of battery cells 100, a pair of side plates 220 coupled orthogonally to the end plates 210, and a top plate 230 disposed on an upper side of the flexible circuit board 320.

A bottom plate may be provided under the plurality of battery cells 100 to support lower portions of the plurality of battery cells 100. The plurality of battery cells 100, the busbar holder 310 having the busbars 311, and the flexible circuit board 320 may be housed inside the frame 200.

The busbar holder 310 may be disposed on an upper side of the cap assembly 120 and may be provided with the busbar 311 that is electrically coupled to electrode terminals of the battery cell 100. In some embodiments, the busbar holder 310 may be a substantially rectangular plate and may be formed of an insulating material.

The busbar holder 310 may be formed with a plurality of through holes through which the positive electrode terminal and the negative electrode terminal of the cap assembly 120 are exposed. The positive electrode terminal and the negative electrode terminal exposed through the through holes of the busbar holder 310 may be electrically connected to the busbar 311.

The busbar 311 may electrically connect the positive electrode terminal and the negative electrode terminal. The busbar 311 may connect the plurality of battery cells 100 in series and/or in parallel. Accordingly, the busbar 311 may be provided in a plurality. In some embodiments, the busbar 311 may electrically connect the positive electrode terminal of the battery cell 100 to the positive electrode terminal or the negative electrode terminal of another battery cell 100. The busbar 311 may also electrically connect the negative electrode terminal of the battery cell 100 to the positive electrode terminal or the negative electrode terminal of another battery cell 100.

The busbar 311 may be coupled to the positive electrode terminal and/or the negative electrode terminal by welding or another method to be electrically connected. Regions other than the positive electrode terminal and the negative electrode terminal of the battery cell 100 may be electrically insulated from the busbar 311 by the busbar holder 310. The flexible circuit board 320 may be interposed between the busbar 311 and the top plate 230, and the busbar 311 may be electrically connected to the flexible circuit board 320. The second coupling portion 600 coupled to the busbar 311 and the first coupling portion 400 coupled to the flexible circuit board 320 may be coupled and electrically connected.

The flexible circuit board 320 may be referred to as an FPCB (Flexible Printed Circuit Board) or an FPCA (Flexible Printed Circuit Assembly). The flexible circuit board 320 may mount various components or circuits that measure state information of the battery cell 100, such as voltage and/or temperature, and that control and/or manage the battery cell 100. In some embodiments, the flexible circuit board 320 may include a battery-management system (BMS). The flexible circuit board 320 may be electrically connected to an outside of the battery module 10 through a separate connector.

In some embodiments, the flexible circuit board 320 may include a voltage sensor for measuring a voltage of the battery cell 100 and a temperature sensor 322 for measuring a temperature of the battery cell 100.

In some embodiments, the flexible circuit board 320 may be substantially rectangular and may be disposed such that a long-side direction thereof coincides with the first direction X (the battery-cell-arrangement direction). Because the flexible circuit board 320 is to be electrically connected to the busbar 311, the flexible circuit board 320 may have a size that covers at least a certain area of the busbar holder 310. The flexible circuit board 320 may have a size sufficient to be adjacent to at least a busbar-installation region to achieve smooth connection with the busbar 311.

For example, with reference to FIG. 1, the flexible circuit board 320 may have a long-side length corresponding to a distance between the outermost busbar disposed on a left side and the outermost busbar disposed on a right side along the first direction X. The flexible circuit board 320 may also have a short-side length corresponding to a distance, along a second direction Y intersecting the first direction X, between busbars disposed on both sides.

The flexible circuit board 320 may be disposed on an upper side of the busbar holder 310. However, the temperature sensor 322 provided on the flexible circuit board 320 may be brought into contact with the battery cell 100 by passing through a temperature-sensor receiving hole formed in the busbar holder 310.

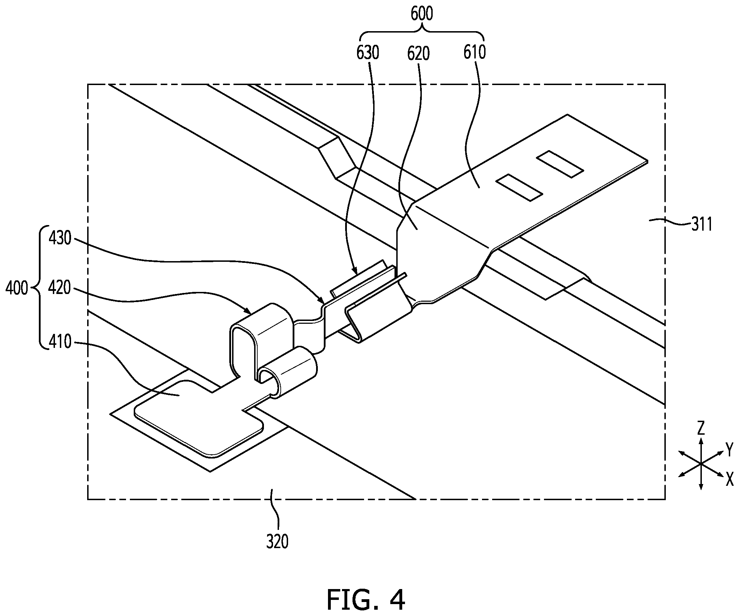

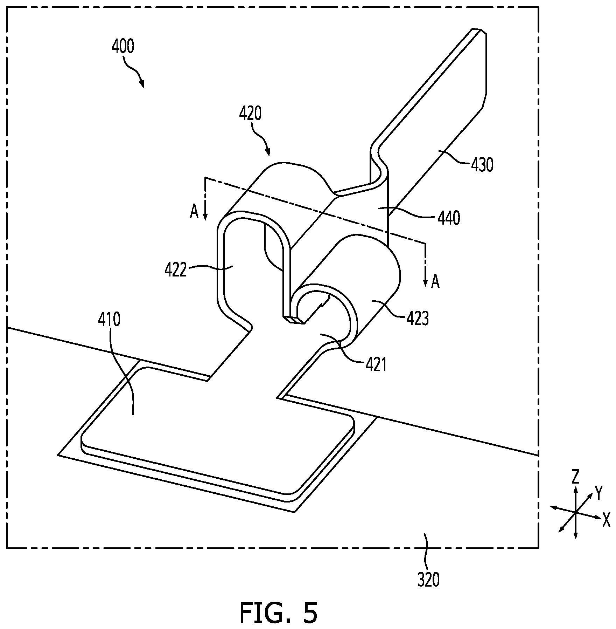

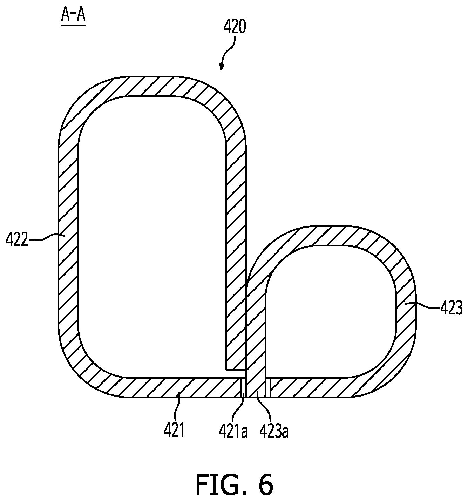

FIG. 4 is a perspective view illustrating an example in which the first coupling portion and the second coupling portion are coupled in the battery module according to some embodiments of the present disclosure, FIG. 5 is a perspective view illustrating an example of the first coupling portion, and FIG. 6 is a cross-sectional view illustrating an example taken along line A-A of FIG. 5.

With reference to FIGS. 4-6, the battery module may include the first coupling portion 400 electrically coupled to the flexible circuit board 320 and the second coupling portion 600 electrically coupled to the busbar 311. The first coupling portion 400 and the second coupling portion 600 may be detachably configured with respect to each other and may be fabricated of a conductive material to be electrically connected. By coupling the first coupling portion 400 and the second coupling portion 600, the flexible circuit board 320 and the busbar 311 may be electrically connected to measure a voltage of the battery cell 100. Because the first coupling portion 400 and the second coupling portion 600 are detachably coupled, when replacement is required due to damage or a defect of the flexible circuit board 320, the flexible circuit board 320 may be easily replaced without damage to the busbar 311 by separating the first coupling portion 400 and the second coupling portion 600.

The first coupling portion 400 may include a first base portion 410 coupled to the flexible circuit board 320, an insertion portion 430 extending from the first base portion 410 and inserted into the second coupling portion 600 to be electrically connected, and a first bridge portion 420 formed between the first base portion 410 and the insertion portion 430.

The first base portion 410 may be coupled to a surface of the flexible circuit board 320 by soldering, thermal fusion, adhesive bonding, or another method. The first base portion 410 may be formed of a metallic conductive material and may be electrically connected to a circuit pattern of the flexible circuit board 320 through which an electrical signal is transmitted.

The insertion portion 430 may be an electrode terminal extending from the first base portion 410 and inserted into a receiving portion 630 of the second coupling portion 600 to be electrically coupled. The insertion portion 430 may extend in the second direction Y from the first base portion 410 toward the second coupling portion 600.

In some embodiments, the insertion portion 430 may be formed in a rectangular-plate shape and may be coupled by interference fitting when inserted into the receiving portion 630 of the second coupling portion 600. The insertion portion 430 may be disposed such that a broad face thereof faces the first direction X and a thin-thickness side thereof is upright in a third direction Z (a height direction of the battery cell). That is, the insertion portion 430 may be inserted into or separated from the receiving portion 630 of the second coupling portion 600 in the third direction Z. However, the shape of the insertion portion 430 may have any shape as long as the insertion portion 430 may be inserted into, and fitted and coupled to the receiving portion 630 of the second coupling portion 600.

The first bridge portion 420 may connect the first base portion 410 and the insertion portion 430 and may be integrally formed with the first base portion 410 and the insertion portion 430. The first bridge portion 420 may extend in the second direction Y from the first base portion 410.

In some embodiments, the first bridge portion 420 may include a first bridge body 421 connected to the first base portion 410, a gripping portion 422 extending from one side of the first bridge body 421, and a support portion 423 extending from another side of the first bridge body 421.

The first bridge body 421 may extend in the second direction Y from the first base portion 410 and may be formed in a rectangular-plate shape.

The gripping portion 422 may extend from one side of the first bridge body 421 and may be bent to protrude in the third direction Z in which the insertion portion 430 is separated from the second coupling portion 600. The gripping portion 422 may protrude further in the third direction Z than the insertion portion 430. The gripping portion 422 may be a structure that a user may grip and manipulate with fingers. Specifically, the user may grip and manipulate the gripping portion 422 and detach the insertion portion 430 from the receiving portion 630 of the second coupling portion 600. In some embodiments, the gripping portion 422 may be formed with an area and a thickness that the user may conveniently grip and manipulate.

The insertion portion 430 may extend in the third direction Z from the gripping portion 422 and may be formed integrally with the gripping portion 422.

The support portion 423 may extend from another side of the first bridge body 421 and may be bent to protrude in the third direction Z, which is the same direction as the gripping portion 422. The support portion 423 may be in close contact with a side surface of the gripping portion 422 in the state in which the support portion 423 protrudes in the third direction Z, thereby supporting the gripping portion 422.

After being bent to protrude in the third direction Z, the support portion 423 may be coupled to the first bridge body 421. In some embodiments, the support portion 423 may further include a coupling protrusion 423a protruding from an end portion thereof and inserted into and coupled to a coupling groove 421a formed in the first bridge body 421. By coupling the support portion 423 to the first bridge body 421, the gripping portion 422 may be supported more stably.

In some embodiments, the first coupling portion 400 may further include a first bent portion 440 connecting the gripping portion 422 and the insertion portion 430 and bent to protrude in the first direction X intersecting the second direction Y in which the gripping portion 422 and the insertion portion 430 are connected.

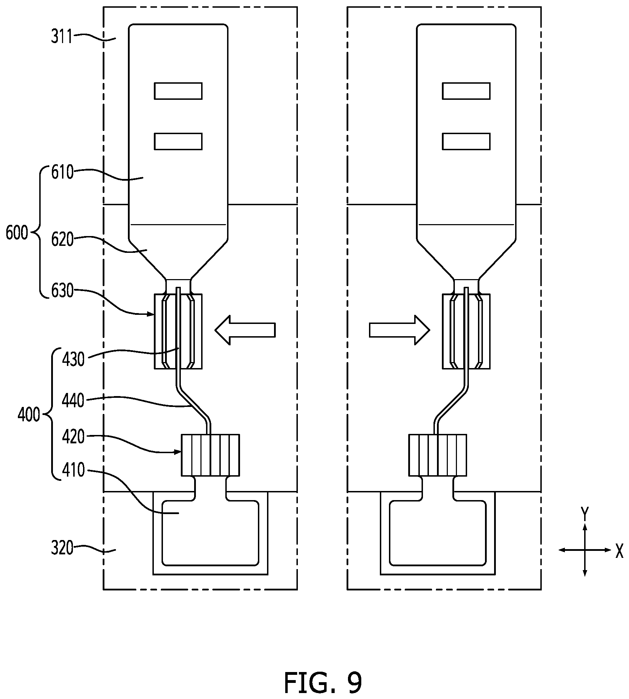

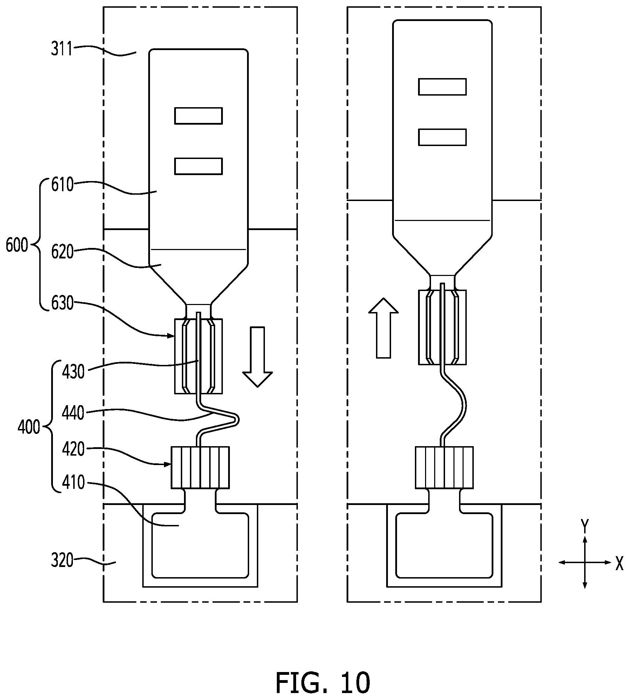

The first bent portion 440 may be an elastically deformable structure and may provide play for coupling the first coupling portion 400 to the second coupling portion 600. In addition, when relative movement occurs in the first direction X or the second direction Y in a state where the first coupling portion 400 and the second coupling portion 600 are coupled, the first bent portion 440 may absorb the movement, thereby preventing stress from being applied to the flexible circuit board 320 and the busbar 311. The first bent portion 440 is described in greater detail with reference to FIGS. 9 and 10.

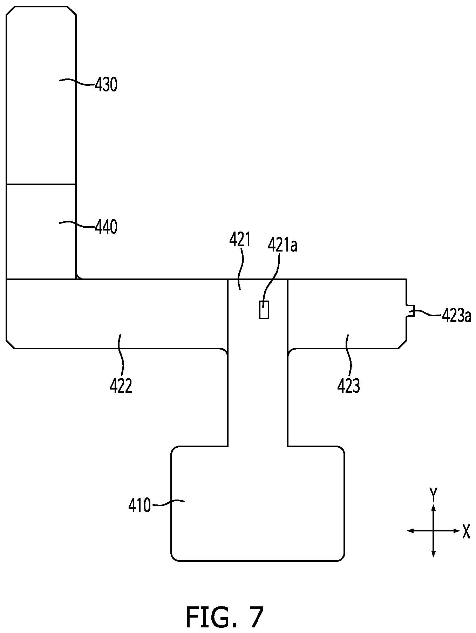

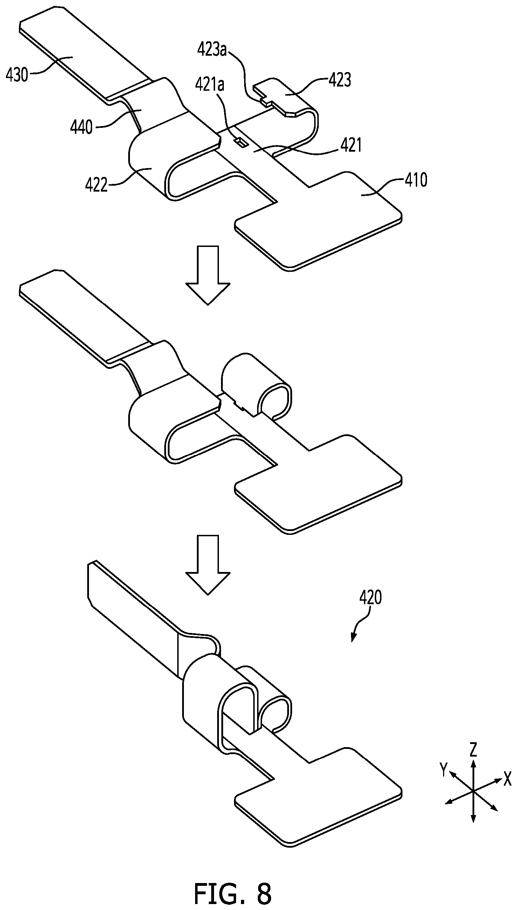

FIG. 7 is a plan view illustrating an example of a plate for manufacturing the first coupling portion in the battery module according to some embodiments of the present disclosure, and FIG. 8 is a perspective view illustrating an example of manufacturing the first coupling portion by bending the plate.

With reference to FIGS. 7 and 8, the first coupling portion 400 may be integrally formed by cutting and shaping a conductive metal plate. In some embodiments, copper, a copper alloy, or a nickel-plated copper plate may be used as a metal material constituting the first coupling portion 400. However, the first coupling portion 400 may be formed of any material as long as excellent electrical conductivity and mechanical workability are simultaneously satisfied.

As illustrated in FIG. 7, by press-working or laser cutting the rectangular plate, regions forming the first base portion 410, the first bridge body 421, the gripping portion 422, the support portion 423, the first bent portion 440, and the insertion portion 430 may be processed into a planar pattern shape.

Thereafter, as illustrated in FIG. 8, through a bending process, each component may be three-dimensionally formed.

First, the first bent portion 440 may be formed by bending between the insertion portion 430 and the gripping portion 422, and one side of the first bridge body 421 may be bent in the third direction Z to form the gripping portion 422. Then, the other side of the first bridge body 421 may be bent in the third direction Z to form the support portion 423. The coupling protrusion 423a formed at an end of the support portion 423 may be inserted into the coupling groove 421a formed in the first bridge body 421. At this time, the insertion portion 430 extending from the gripping portion 422 may be disposed so that the thin-thickness side thereof stands upright in the third direction Z.

FIG. 9 illustrates an example in which the first bent portion is deformed in a first direction in the first coupling portion of the battery module according to some embodiments of the present disclosure, and FIG. 10 illustrates an example in which the first bent portion is deformed in a second direction in the first coupling portion.

With reference to FIG. 9, in a state where the insertion portion 430 is inserted into the receiving portion 630 of the second coupling portion 600, the first bent portion 440 may be elastically deformed so that the first coupling portion 400 and the second coupling portion 600 may move relative to each other in the first direction X (left-right direction in the drawing).

In some embodiments, even when positions of the receiving portion 630 of the second coupling portion 600 and the insertion portion 430 of the first coupling portion 400 do not exactly coincide in the first direction X, the first bent portion 440 may be deformed to absorb a gap corresponding to a positional tolerance.

With reference to FIG. 10, in a state where the insertion portion 430 is inserted into the receiving portion 630 of the second coupling portion 600, the first bent portion 440 may be elastically deformed so that the first coupling portion 400 and the second coupling portion 600 may move relative to each other in the second direction Y (up-down direction in the drawing).

In some embodiments, even when positions where the receiving portion 630 of the second coupling portion 600 and the insertion portion 430 of the first coupling portion 400 are to be coupled do not exactly coincide in the second direction Y, the first bent portion 440 may be deformed to absorb a gap corresponding to a positional tolerance.

As described above, even when a positional tolerance occurs between positions for assembly of the second coupling portion 600 coupled to the busbar 311 and the first coupling portion 400 coupled to the flexible circuit board 320, the positional tolerance may be accommodated through deformation of the first bent portion 440. In addition, even when thermal deformation or vibration occurs during use after assembly, deformation may be absorbed in the first bent portion 440. Therefore, a decrease in coupling strength between the flexible circuit board 320 and the first coupling portion 400 and between the busbar 311 and the second coupling portion 600 may be prevented.

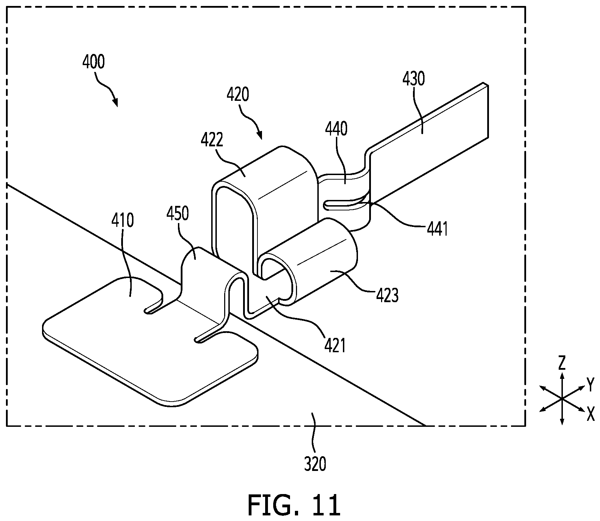

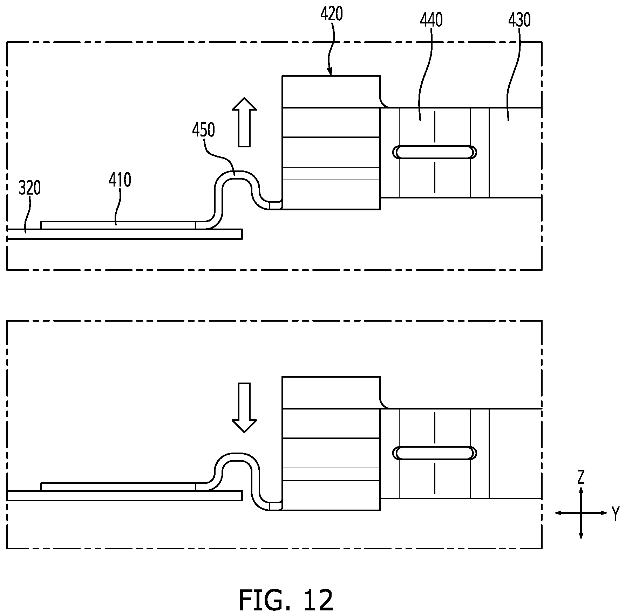

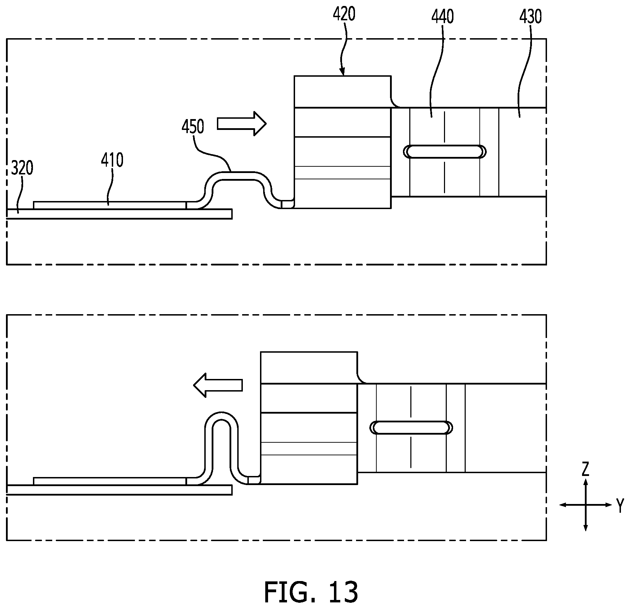

FIG. 11 is a perspective view illustrating an example in which a second bent portion is further formed in the first coupling portion of the battery module according to some embodiments of the present disclosure, FIG. 12 illustrates an example in which the second bent portion is deformed in a third direction, and FIG. 13 illustrates an example in which the second bent portion is deformed in the second direction.

With reference to FIG. 11, the first coupling portion 400 may further include a second bent portion 450 connecting the first bridge body 421 and the first base portion 410 and bent to protrude in the third direction Z intersecting a direction in which the first bridge body 421 and the first base portion 410 are connected.

With reference to FIGS. 4 and 12, in a state where the insertion portion 430 is inserted into the receiving portion 630 of the second coupling portion 600, the second bent portion 450 may be elastically deformed so that the first coupling portion 400 and the second coupling portion 600 may move relative to each other in the third direction Z (up-down direction in the drawing).

In some embodiments, even when positions of the receiving portion 630 of the second coupling portion 600 and the insertion portion 430 of the first coupling portion 400 do not exactly coincide in the third direction Z, the second bent portion 450 may be deformed to absorb a gap corresponding to a positional tolerance.

With reference to FIGS. 4 and 13, in a state where the insertion portion 430 is inserted into the receiving portion 630 of the second coupling portion 600, the second bent portion 450 may be elastically deformed so that the first coupling portion 400 and the second coupling portion 600 may move relative to each other in the second direction Y (left-right direction in the drawing).

In some embodiments, even when positions where the receiving portion 630 of the second coupling portion 600 and the insertion portion 430 of the first coupling portion 400 are to be coupled do not exactly coincide in the second direction Y, the second bent portion 450 may be deformed to absorb a gap corresponding to a positional tolerance. That is, together with the first bent portion 440, the second bent portion 450 may absorb deformation in the second direction Y.

As described above, even when a positional tolerance occurs between positions for assembly of the second coupling portion 600 coupled to the busbar 311 and the first coupling portion 400 coupled to the flexible circuit board 320, the positional tolerance may be accommodated through deformation of the second bent portion 450. In addition, even when thermal deformation or vibration occurs during use after assembly, deformation may be absorbed in the second bent portion 450. Therefore, a decrease in coupling strength between the flexible circuit board 320 and the first coupling portion 400 and between the busbar 311 and the second coupling portion 600 may be prevented.

With reference to FIG. 11, the first coupling portion 400 may further include a through-hole 441 formed in the first bent portion 440. The through-hole 441 may be formed in a slit shape along the second direction Y in a central region of the first bent portion 440. The through-hole 441 may perform a function of dispersing a load applied to the first bent portion 440 when the first bent portion 440 is deformed. Accordingly, breakage of the first bent portion 440 may be prevented. A through-hole may also be formed in the second bent portion 450.

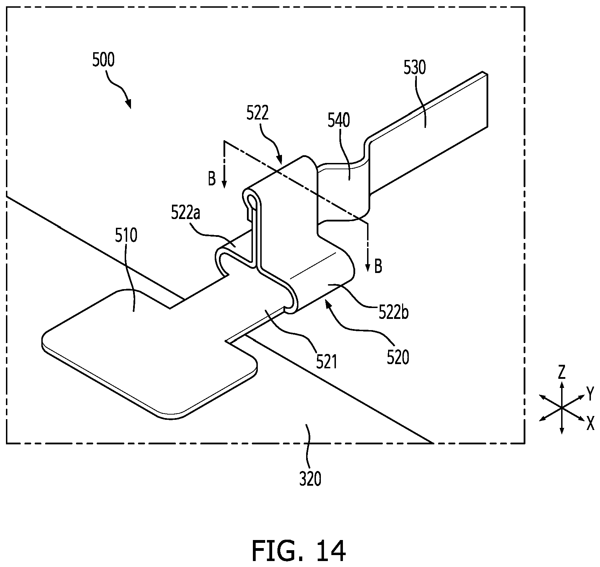

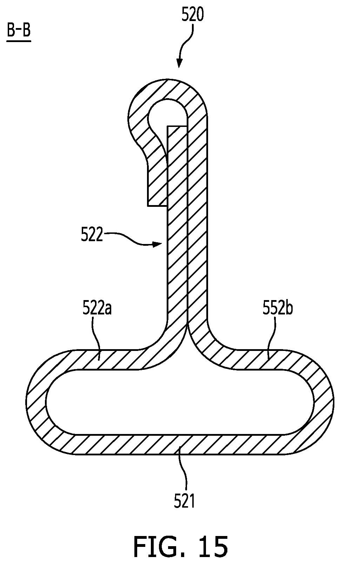

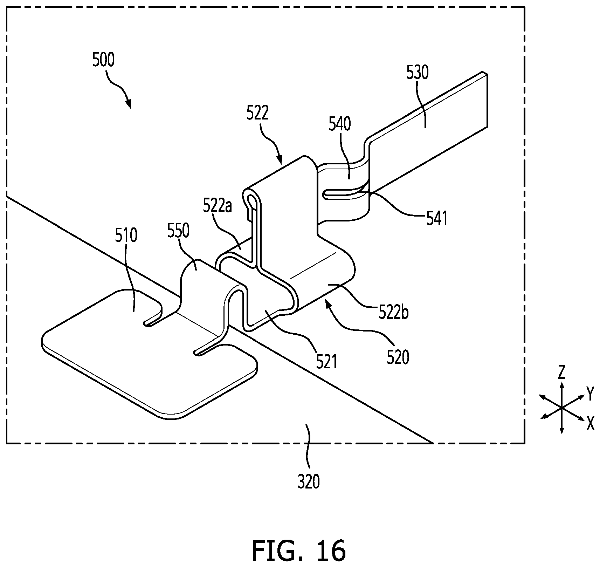

FIG. 14 is a perspective view illustrating another example of the first coupling portion in the battery module according to some embodiments of the present disclosure, FIG. 15 is a cross-sectional view illustrating an example taken along line B-B of FIG. 14, and FIG. 16 is a perspective view illustrating an example in which the second bent portion is further formed in another example of the first coupling portion.

With reference to FIGS. 4, 14 and 15, another example of the first coupling portion 500 may include a first base portion 510 coupled to the flexible circuit board 320, an insertion portion 530 extending from the first base portion 510 and inserted into the second coupling portion 600 to be electrically connected, and a first bridge portion 520 formed between the first base portion 510 and the insertion portion 530.

The first base portion 510 may be coupled to a surface of the flexible circuit board 320 by soldering, thermal fusion, adhesive bonding, or another method. The first base portion 510 may be formed of a metallic conductive material and may be electrically connected to a circuit pattern of the flexible circuit board 320 through which an electrical signal is transmitted.

The insertion portion 530 may be an electrode terminal extending from the first base portion 510 and inserted into the receiving portion 630 of the second coupling portion 600 to be electrically coupled. The insertion portion 530 may extend in the second direction Y from the first base portion 510 toward the second coupling portion 600.

The first bridge portion 520 may connect the first base portion 510 and the insertion portion 530 and may be integrally formed with the first base portion 510 and the insertion portion 530. The first bridge portion 520 may extend in the second direction Y from the first base portion 510.

In some embodiments, the first bridge portion 520 may include a first bridge body 521 connected to the first base portion 510, and a gripping portion 522 that extends from the first bridge body 521 and protrudes in the third direction Z in which the insertion portion 530 is separated from the second coupling portion 600.

The first bridge body 521 may extend in the second direction Y from the first base portion 510 and may be formed in a rectangular-plate shape.

The gripping portion 522 may extend from one side of the first bridge body 521 and may be bent to protrude in the third direction Z in which the insertion portion 530 is separated from the second coupling portion 600. The gripping portion 522 may protrude further in the third direction Z than the insertion portion 530. The gripping portion 522 may be a structure that a user may grip and manipulate with fingers. Specifically, the user may grip and manipulate the gripping portion 522 and detach the insertion portion 530 from the receiving portion 630 of the second coupling portion 600. In some embodiments, the gripping portion 522 may be formed with an area and a thickness that the user may conveniently grip and manipulate.

In some embodiments, the gripping portion 522 may include a first bent portion 522a bent and extending from one side of the first bridge body 521 and a second bent portion 522b bent and extending from another side of the first bridge body 521 and coupled to the first bent portion 522a.

The first bent portion 522a may extend from one side, in the first direction X, of the first bridge body 521, may be bent toward a center of the first bridge body 521, and may be bent such that an end portion thereof is disposed in the third direction Z in which the insertion portion 530 is separated from the second coupling portion 600. The insertion portion 530 may extend in the third direction Z from the first bent portion 522a and may be formed integrally (e.g., may be formed in a same process of a same material to have a monolithic and seamless structure) with the first bent portion 522a.

The second bent portion 522b may extend from another side, in the first direction X, of the first bridge body 521, may be bent toward the center of the first bridge body 521, and may be bent so as to protrude in the same direction as the first bent portion 522a, the second bent portion 522b being coupled while wrapping an end portion of the first bent portion 522a. The first bent portion 522a and the second bent portion 522b may be formed in an approximately L-shape and may be symmetrically formed with respect to the center of the first bridge body 521. The first bent portion 522a and the second bent portion 522b may be coupled in a state where they are in close contact, and the end portion of the second bent portion 522b may wrap the end portion of the first bent portion 522a.

In some embodiments, the first coupling portion 500 may further include a first bent portion 540 connecting the first bent portion 522a and the insertion portion 530 and bent to protrude in the first direction X intersecting a direction in which the first bent portion 522a and the insertion portion 530 are connected.

The first bent portion 540 may be an elastically deformable structure and may provide space for coupling the first coupling portion 500 to the second coupling portion 600. In addition, when relative movement occurs in the first direction X or the second direction Y in a state where the first coupling portion 500 and the second coupling portion 600 are coupled, the first bent portion 540 may absorb the movement, thereby preventing stress from being applied to the flexible circuit board 320 and the busbar 311. The first bent portion 540 may function in the same manner as the first bent portion 440 described with reference to FIGS. 9-10.

With reference to FIG. 16, the first coupling portion 500 may further include a second bent portion 550 connecting the first bridge body 521 and the first base portion 510 and bent to protrude in the third direction Z intersecting a direction in which the first bridge body 521 and the first base portion 510 are connected.

With reference to FIGS. 4 and 16, in a state where the insertion portion 530 is inserted into the receiving portion 630 of the second coupling portion 600, the second bent portion 550 may be elastically deformed so that the first coupling portion 500 and the second coupling portion 600 may move relative to each other in the third direction Z. The second bent portion 550 may function in the same manner as the second bent portion 450 described with reference to FIGS. 12-13.

The first coupling portion 500 may further include a through-hole 541 formed in the first bent portion 540. The through-hole 541 may be formed in a slit shape along the second direction Y in a central region of the first bent portion 540. The through-hole 541 may perform a function of dispersing a load applied to the first bent portion 540 when the first bent portion 540 is deformed. Accordingly, breakage of the first bent portion 540 may be prevented. A through-hole may also be formed in the second bent portion 550.

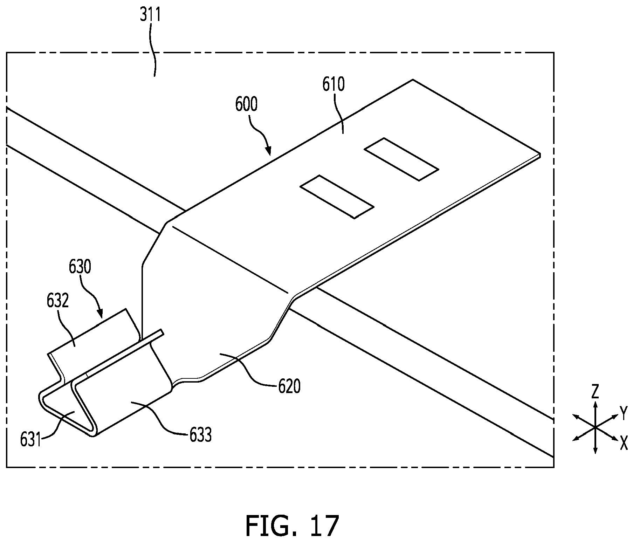

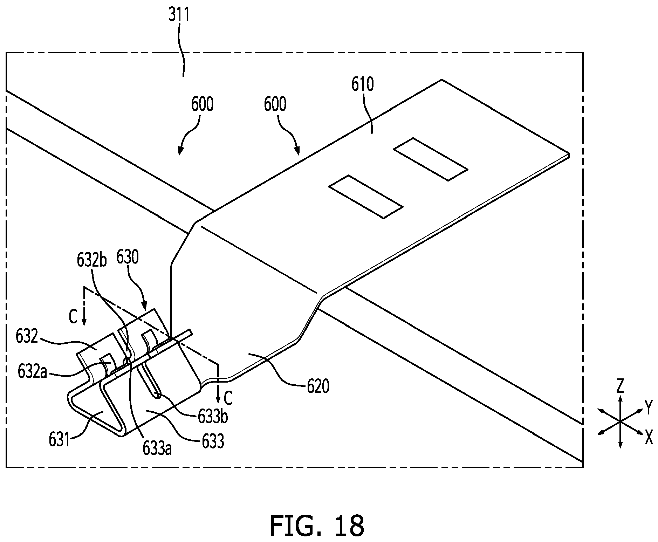

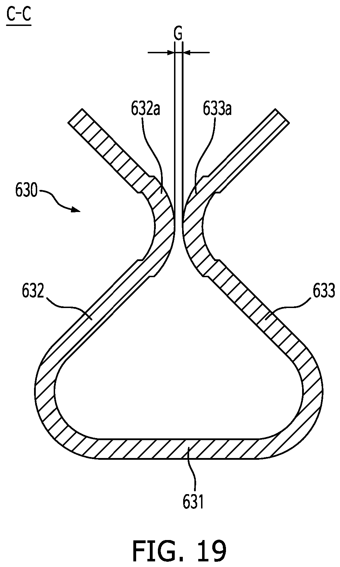

FIG. 17 is a perspective view illustrating an example of the second coupling portion in the battery module according to some embodiments of the present disclosure, FIG. 18 is a perspective view illustrating an example in which protrusions and slits are further formed in the second coupling portion, and FIG. 19 is a cross-sectional view illustrating an example taken along line C-C of FIG. 18.

With reference to FIGS. 4 and 17, the second coupling portion 600 may include a second base portion 610 coupled to the busbar 311, a second bridge portion 620 extending from the second base portion 610, and a receiving portion 630 extending from the second bridge portion 620, the receiving portion 630 receiving the first coupling portion 400 to be electrically connected thereto.

The second base portion 610 may be coupled to a surface of the busbar 311 by soldering, thermal fusion, adhesive bonding, or another method. The second base portion 610 may be formed of a metallic conductive material and may be electrically connected to the busbar 311.

The second bridge portion 620 may connect the second base portion 610 and the receiving portion 630 and may position the receiving portion 630. In some embodiments, the second bridge portion 620 may extend in the second direction Y from the second base portion 610 and may be bent downward in the third direction Z so that the receiving portion 630 is positioned at a lower height than the second base portion 610. Because a thickness of the flexible circuit board 320 is formed smaller than a thickness of the busbar 311, this configuration aligns positions of the first coupling portion 400 coupled to the flexible circuit board 320 and the receiving portion 630.

The receiving portion 630 may be an electrode terminal extending from the second bridge portion 620 and may receive the insertion portion 430 of the first coupling portion 400 to be electrically coupled. The receiving portion 630 may extend in the second direction Y from the second base portion 610 toward the first coupling portion 400.

In some embodiments, the receiving portion 630 may include a receiving body 631 connected to the second bridge portion 620, and first and second pressing portions 632 and 633 bent from both sides of the receiving body 631 and configured to couple to the first coupling portion 400.

The first pressing portion 632 may extend from one side, in the first direction X, of the receiving body 631 in the third direction Z in which the first coupling portion 400 is separated, and may be bent toward an inner side of the receiving body 631. The first pressing portion 632 may be formed in a substantially V-shape, and a corner thereof may be disposed toward the center of the receiving body 631.

The second pressing portion 633 may extend from another side, in the first direction X, of the receiving body 631 in the third direction Z in which the first coupling portion 400 is separated, and may be bent to face the first pressing portion 632. The second pressing portion 633 may also be formed in a substantially V-shape, and a corner thereof may be disposed toward the center of the receiving body 631.

The first pressing portion 632 and the second pressing portion 633 may be symmetrically formed with respect to the center of the receiving body 631. In some embodiments, corners of the first pressing portion 632 and the second pressing portion 633 may be in close contact or spaced apart by a predetermined distance. The first pressing portion 632 and the second pressing portion 633 may be elastically deformably connected to the receiving body 631, and when the insertion portion 430 is inserted between the first pressing portion 632 and the second pressing portion 633, both the first pressing portion 632 and the second pressing portion 633 may be in close contact with respective opposite faces of the insertion portion 430.

With reference to FIGS. 4, 18 and 19, the receiving portion 630 may further include a first protrusion 632a protruding from the first pressing portion 632 toward the second pressing portion 633 and a second protrusion 633a protruding from the second pressing portion 633 toward the first pressing portion 632. By forming the first protrusion 632a and the second protrusion 633a, a contact area between the first pressing portion 632 and the second pressing portion 633 and the insertion portion 430 may be reduced. When the contact area between the first pressing portion 632 and the second pressing portion 633 and the insertion portion 430 is large, greater force may be required to insert or separate the insertion portion 430 into or from the receiving portion 630. If a large force acts when inserting or separating the insertion portion 430 into or from the receiving portion 630, a load may be applied between the first coupling portion 400 and the flexible circuit board 320 and between the second coupling portion 600 and the busbar 311, causing a decrease in coupling strength or damage.

The first protrusion 632a and the second protrusion 633a may be formed with a predetermined gap G. The gap G between the first protrusion 632a and the second protrusion 633a may be formed smaller than a thickness of the insertion portion 430. Accordingly, the first protrusion 632a and the second protrusion 633a may be in close-contact fastening to opposite faces of the insertion portion 430. However, the first protrusion 632a and the second protrusion 633a may, in other embodiments, be formed in a state where they contact each other.

In some embodiments, the first protrusion 632a may be formed by pressing the first pressing portion 632 so that the first protrusion 632a protrudes toward and faces the second pressing portion 633. The second protrusion 633a may be formed by pressing the second pressing portion 633 so that the second protrusion 633a protrudes toward and faces the first pressing portion 632. However, the first protrusion 632a and the second protrusion 633a may, in other embodiments, be respectively formed on the first pressing portion 632 and the second pressing portion 633 by welding or another method.

The first pressing portion 632 may include a first slit 632b recessed in the third direction Z intersecting a direction in which the receiving portion 630 extends from the second base portion 610, and the second pressing portion 633 may include a second slit 633b recessed in the third direction Z intersecting the direction in which the receiving portion 630 extends from the second base portion 610.

The first slit 632b and the second slit 633b may be formed at the same position along the first direction X. However, the first slit 632b and the second slit 633b may, in other embodiments, be formed at different positions along the first direction X.

The first slit 632b and the second slit 633b may perform a function of dispersing a load applied to the first pressing portion 632 and the second pressing portion 633 when the first pressing portion 632 and the second pressing portion 633 are deformed. Accordingly, breakage of the first pressing portion 632 and the second pressing portion 633 may be prevented.

In some embodiments, as illustrated in FIG. 18, when the first slit 632b is formed at a center of the first pressing portion 632, the first protrusion 632a may be formed on both sides of the first slit 632b. Similarly, when the second slit 633b is formed at a center of the second pressing portion 633, the second protrusion 633a may be formed on both sides of the second slit 633b.

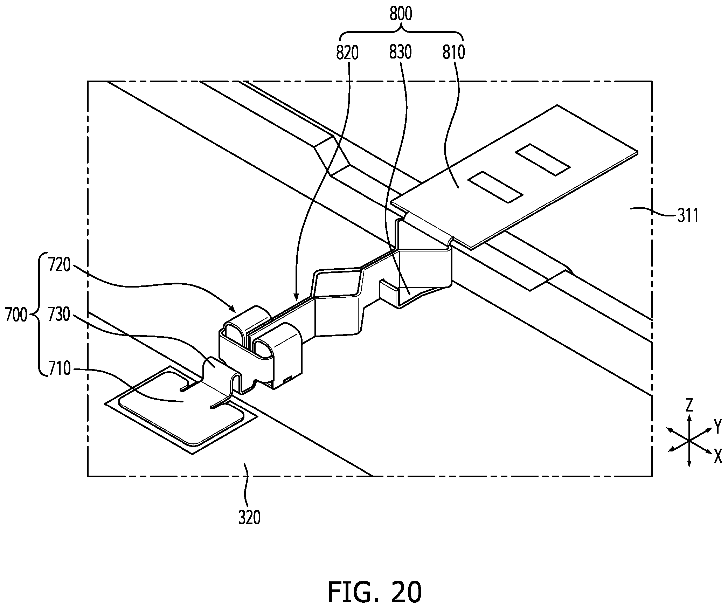

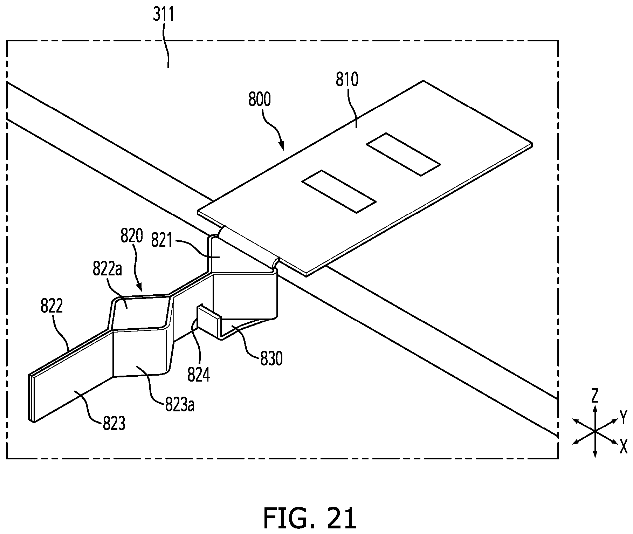

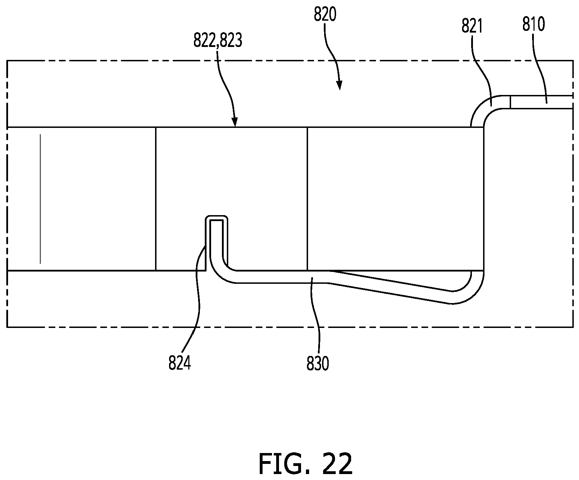

FIG. 20 is a perspective view illustrating an example in which another example of the first coupling portion and the second coupling portion are coupled in the battery module according to some embodiments of the present disclosure, FIG. 21 is a perspective view illustrating another example of the second coupling portion, and FIG. 22 is a partial side view illustrating another example of the second coupling portion.

With reference to FIGS. 20-22, the battery module may include a first coupling portion 700 electrically coupled to the flexible circuit board 320 and a second coupling portion 800 electrically coupled to the busbar 311. The first coupling portion 700 and the second coupling portion 800 may be detachably configured with respect to each other and may be fabricated of a conductive material to be electrically connected. The second coupling portion 800 provided on the busbar 311 may be detachably inserted into the first coupling portion 700 provided on the flexible circuit board 320.

In some embodiments, the second coupling portion 800 may include a second base portion 810 coupled to the busbar 311, an insertion portion 820 extending from the second base portion 810 and inserted into the first coupling portion 700 to be electrically connected, and a support protrusion 830 extending from the second base portion 810 and inserted into a support groove 824 formed in the insertion portion 820 to support the insertion portion 820.

The second base portion 810 may be coupled to a surface of the busbar 311 by soldering, thermal fusion, adhesive bonding, or another method. The second base portion 810 may be formed of a metallic conductive material and may be electrically connected to the busbar 311.

The insertion portion 820 may be an electrode terminal extending from the second base portion 810 and inserted into a receiving portion 720 of the first coupling portion 700 to be electrically coupled. The insertion portion 820 may extend in the second direction Y from the second base portion 810 toward the first coupling portion 700.

The insertion portion 820 may include an insertion-body 821 extending from the second base portion 810, a first extension portion 822 extending from one side of the insertion-body 821, and a second extension portion 823 extending from another side of the insertion-body 821 and overlapping the first extension portion 822. The first extension portion 822 and the second extension portion 823 may be inserted in an overlapped state into the receiving portion 720 of the first coupling portion 700.

In some embodiments, the insertion-body 821 may extend in the second direction Y from the second base portion 810 and may be bent downward in the third direction Z so that the first extension portion 822 and the second extension portion 823 are positioned at a lower height than the second base portion 810. Because the thickness of the flexible circuit board 320 is formed smaller than the thickness of the busbar 311, this configuration aligns positions of the first coupling portion 700 coupled to the flexible circuit board 320 and the insertion portion 820.

The first extension portion 822 and the second extension portion 823 may be formed in a rectangular-plate shape and may be fitted and coupled in the receiving portion 720 of the first coupling portion 700 in an overlapped state. The first extension portion 822 and the second extension portion 823 may be disposed such that broad faces thereof face the first direction X and thin-thickness sides thereof stand upright in the third direction Z. That is, the first extension portion 822 and the second extension portion 823 may be inserted into or separated from the receiving portion 720 of the first coupling portion 700 in the third direction Z. However, shapes of the first extension portion 822 and the second extension portion 823 may have any shape as long as they are inserted into and fitted and coupled in the receiving portion 720 of the first coupling portion 700.

In some embodiments, the first extension portion 822 may include a first bent portion 822a protruding in a direction opposite to the second extension portion 823 along the first direction X intersecting the second direction Y. A second bent portion 823a may be formed in the second extension portion 823 to be symmetrical with the first bent portion 822a.

The first bent portion 822a and the second bent portion 823a may be elastically deformable structures and may provide space for coupling the second coupling portion 800 to the first coupling portion 700. In addition, when relative movement occurs in the first direction X or the second direction Y in a state where the second coupling portion 800 and the first coupling portion 700 are coupled, the first bent portion 822a and the second bent portion 823a may absorb the movement, thereby preventing stress from being applied to the flexible circuit board 320 and the busbar 311.

The support protrusion 830 may extend from the second base portion 810 and may be inserted into the support groove 824 formed in the insertion portion 820 so as to support the insertion portion 820. In some embodiments, the support protrusion 830 may extend downward in the third direction Z from the insertion-body 821, may be bent in the second direction Y, and then an end portion thereof may be bent upward in the third direction Z. The end portion bent upward of the support protrusion 830 may be inserted into the support groove 824 formed in the insertion portion 820 to support the insertion portion 820. As illustrated in FIG. 22, the support groove 824 may be formed in the first extension portion 822 and the second extension portion 823. With this configuration, the support protrusion 830 may support the insertion portion 820, elongated in the second direction Y, to prevent deformation in a downward direction in the third direction Z.

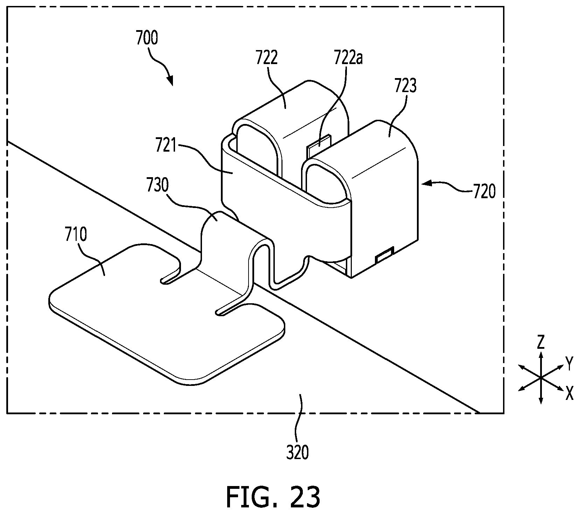

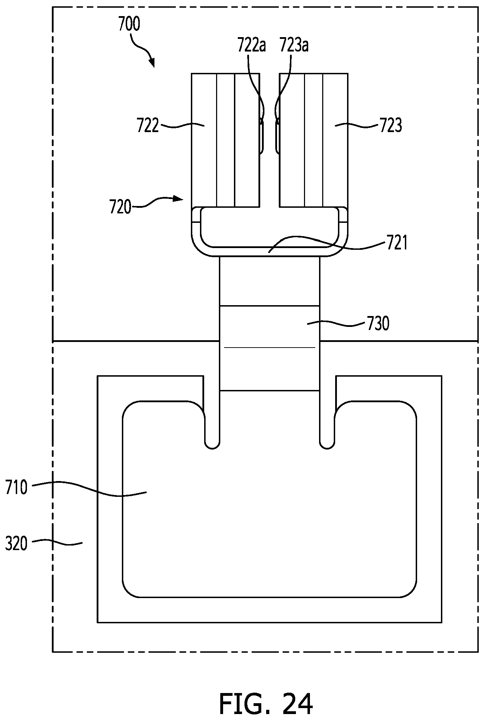

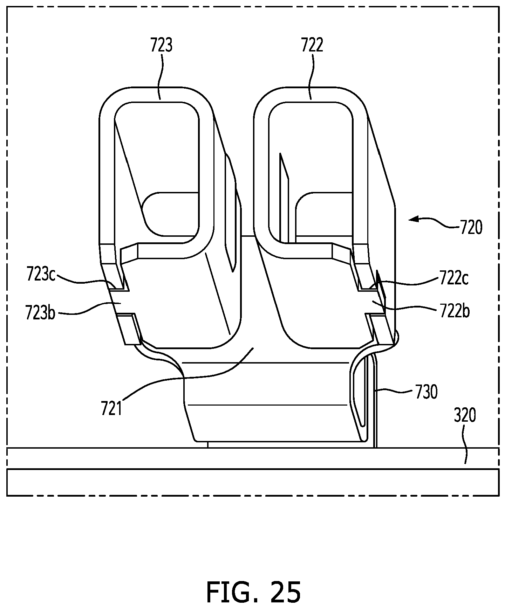

FIG. 23 is a perspective view illustrating another example of the first coupling portion in the battery module, FIG. 24 is a plan view illustrating another example of the first coupling portion, and FIG. 25 is a rear perspective view illustrating another example of the first coupling portion.

With reference to FIGS. 20 and 23-25, the first coupling portion 700 may include a first base portion 710 coupled to the flexible circuit board 320 and a receiving portion 720 extending from the first base portion 710, the receiving portion 720 receiving the second coupling portion 800 inserted thereinto to be electrically connected.

The first base portion 710 may be coupled to a surface of the flexible circuit board 320 by soldering, thermal fusion, adhesive bonding, or another method. The first base portion 710 may be formed of a metallic conductive material and may be electrically connected to a circuit pattern of the flexible circuit board 320 through which an electrical signal is transmitted.

The receiving portion 720 may be an electrode terminal extending from the first base portion 710 and may receive the insertion portion 820 of the second coupling portion 800 to be electrically coupled. The receiving portion 720 may extend in the second direction Y from the first base portion 710 toward the second coupling portion 800.

In some embodiments, the receiving portion 720 may include a receiving body 721 connected to the first base portion 710, a first pressing portion 722 extending from one side of the receiving body 721 and bent into a ring shape, and a second pressing portion 723 extending from another side of the receiving body 721, bent into a ring shape, and disposed to face the first pressing portion 722.

The first pressing portion 722 may extend from one side, in the first direction X, of the receiving body 721, and a ring-shaped bent side thereof may be disposed to face the second pressing portion 723. In some embodiments, the first pressing portion 722 may include a first coupling groove 722c formed at one end portion and a first coupling protrusion 722b formed at another end portion and coupled to the first coupling groove 722c. The first pressing portion 722 may be bent so that both end portions meet each other, and the first coupling protrusion 722b may be inserted into and coupled to the first coupling groove 722c.

The second pressing portion 723 may extend from another side, in the first direction X, of the receiving body 721, and a ring-shaped bent side thereof may be disposed to face the first pressing portion 722. In some embodiments, the second pressing portion 723 may include a second coupling groove 723c formed at one end portion and a second coupling protrusion 723b formed at another end portion and coupled to the second coupling groove 723c. The second pressing portion 723 may be bent so that both end portions meet each other, and the second coupling protrusion 723b may be inserted into and coupled to the second coupling groove 723c.

In some embodiments, the receiving portion 720 may further include a first protrusion 722a protruding from the first pressing portion 722 toward the second pressing portion 723 and a second protrusion 723a protruding from the second pressing portion 723 toward the first pressing portion 722.

By forming the first protrusion 722a and the second protrusion 723a, a contact area between the first pressing portion 722 and the second pressing portion 723 and the insertion portion 820 may be reduced, thereby preventing a large load from being applied between the first coupling portion 700 and the flexible circuit board 320 and between the second coupling portion 800 and the busbar 311 when the insertion portion 820 is inserted into or separated from the receiving portion 720.

The first protrusion 722a and the second protrusion 723a may be formed to have a predetermined gap. The gap between the first protrusion 722a and the second protrusion 723a may be formed smaller than a thickness of the insertion portion 820. However, the first protrusion 722a and the second protrusion 723a may, in other embodiments, be formed in a state where they contact each other.

In some embodiments, the first protrusion 722a may be formed by pressing the first pressing portion 722 so that the first protrusion 722a protrudes toward and faces the second pressing portion 723. The second protrusion 723a may be formed by pressing the second pressing portion 723 so that the second protrusion 723a protrudes toward and faces the first pressing portion 722. However, the first protrusion 722a and the second protrusion 723a may, in other embodiments, be respectively formed on the first pressing portion 722 and the second pressing portion 723 by welding or another method.

The first coupling portion 700 may further include a bent portion 730 connecting the first base portion 710 and the receiving body 721 and bent to protrude in the third direction Z intersecting a direction in which the first base portion 710 and the receiving portion 720 are connected.

When movement in the second direction Y or the third direction Z occurs in a state where the insertion portion 820 of the second coupling portion 800 is inserted into the receiving portion 720, the bent portion 730 may absorb the movement, thereby preventing stress from being applied to the flexible circuit board 320 and the busbar 311.

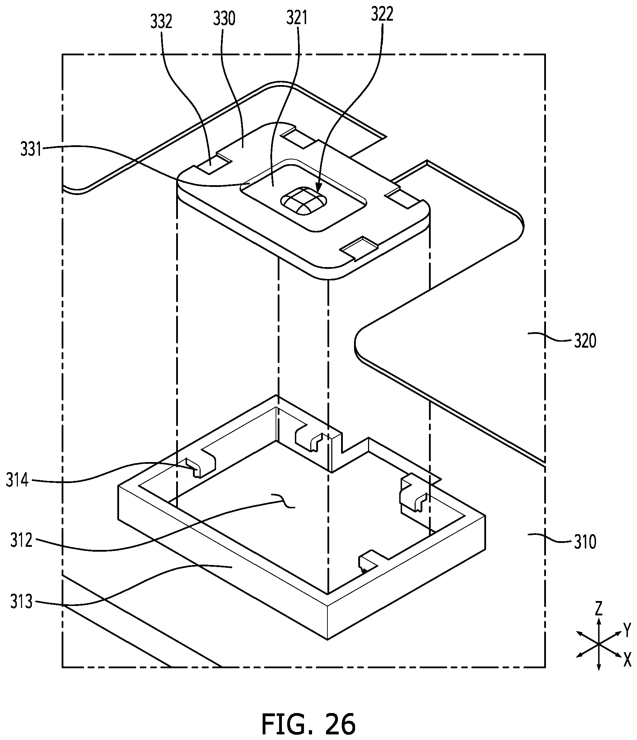

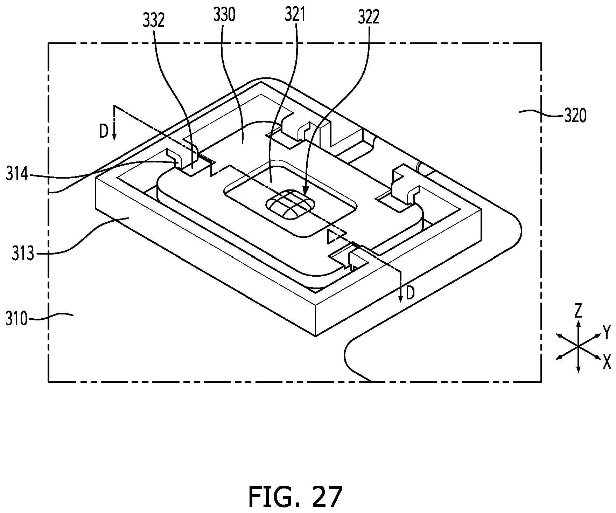

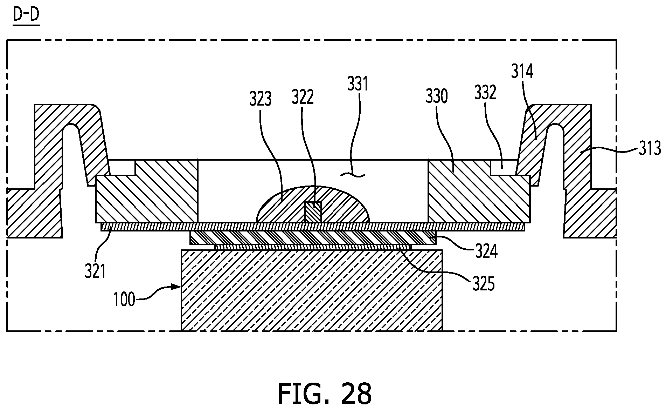

FIG. 26 is an exploded perspective view illustrating an example in which a temperature sensor is coupled to the busbar holder in the battery module according to some embodiments of the present disclosure, FIG. 27 is a perspective view illustrating an example in which the temperature sensor is coupled, and FIG. 28 is a cross-sectional view illustrating an example taken along line D-D of FIG. 27.

With reference to FIGS. 26-28, the battery module may further include a temperature sensor 322 provided on the flexible circuit board 320 and a sensor fixing portion 330 that fixes the temperature sensor 322 to the busbar holder 310.

The temperature sensor 322 may be provided on the flexible circuit board 320, may be inserted through a temperature-sensor receiving hole 312 formed through the busbar holder 310, may be disposed on the battery cell 100, and may measure a temperature of the battery cell 100.

In some embodiments, the temperature sensor 322 may be provided on a temperature-sensor coupling portion 321 protruding to one side from the flexible circuit board 320. The temperature-sensor coupling portion 321 is a part of the flexible circuit board 320 and may include a circuit pattern that is electrically connected to a circuit pattern of the flexible circuit board 320. The temperature sensor 322 may be coupled to and electrically connected to the circuit pattern formed on the temperature-sensor coupling portion 321. To protect the temperature sensor 322 coupled to the temperature-sensor coupling portion 321, a temperature-sensor cover 323 covering the temperature sensor 322 may be formed on the temperature-sensor coupling portion 321. The temperature-sensor cover 323 may be formed of an insulating material.

The temperature sensor 322 may be coupled to an upper surface of the temperature-sensor coupling portion 321, and a metal tab 324 may be further provided on a lower surface of the temperature-sensor coupling portion 321. The metal tab 324 may contact the battery cell 100 and may perform thermal conduction between the battery cell 100 and the temperature-sensor coupling portion 321. The metal tab 324 may be formed of a metal having high thermal conductivity, such as copper or aluminum.

To maintain a state where the metal tab 324 is in close contact with the battery cell 100, an adhesive layer 325 may be provided between the metal tab 324 and the battery cell 100. The adhesive layer 325 may be formed of a thermally conductive double-sided tape to transmit heat. In other embodiments, the adhesive layer 325 may be formed of a thermally conductive adhesive, thermal grease, thermal paste, or the like.

After the metal tab 324 provided on the temperature-sensor coupling portion 321 is attached to the battery cell 100, the sensor fixing portion 330 may be coupled to the temperature-sensor receiving hole 312 while pressing an upper surface of the temperature-sensor coupling portion 321 and may press and fix the temperature sensor 322 to the battery cell 100. In some embodiments, the sensor fixing portion 330 may include a through-hole 331 formed through a center thereof so as not to interfere with the temperature-sensor cover 323. The temperature-sensor cover 323 may be exposed through the through-hole 331 of the sensor fixing portion 330, and the sensor fixing portion 330 may be in close contact with the temperature-sensor coupling portion 321 around the temperature-sensor cover 323.

In some embodiments, the busbar holder 310 may include a protrusion 313 protruding in the third direction Z along a circumference of the temperature-sensor receiving hole 312, the protrusion 313 being in a direction in which the sensor fixing portion 330 is coupled, and a plurality of latching hooks 314 formed along a circumference of the protrusion 313 and latch-fastened to the sensor fixing portion 330. The sensor fixing portion 330 may further include a latching groove 332 in which the latching hook 314 is latch-fastened.

The latching hook 314 may be integrally formed on the protrusion 313 to be elastically deformable. When the sensor fixing portion 330 is pressed in a coupling direction, the latching hook 314 may be elastically deformed toward the protrusion 313 and may be latch-fastened to the sensor fixing portion 330. In a state where the sensor fixing portion 330 is latch-fastened to the latching hook 314, the latching hook 314 may be pressed toward the protrusion 313 to be elastically deformed, and then the sensor fixing portion 330 may be detached from the latching hook 314. Thus, the temperature sensor 322 may be detachably coupled to the busbar holder 310 without damage to components.

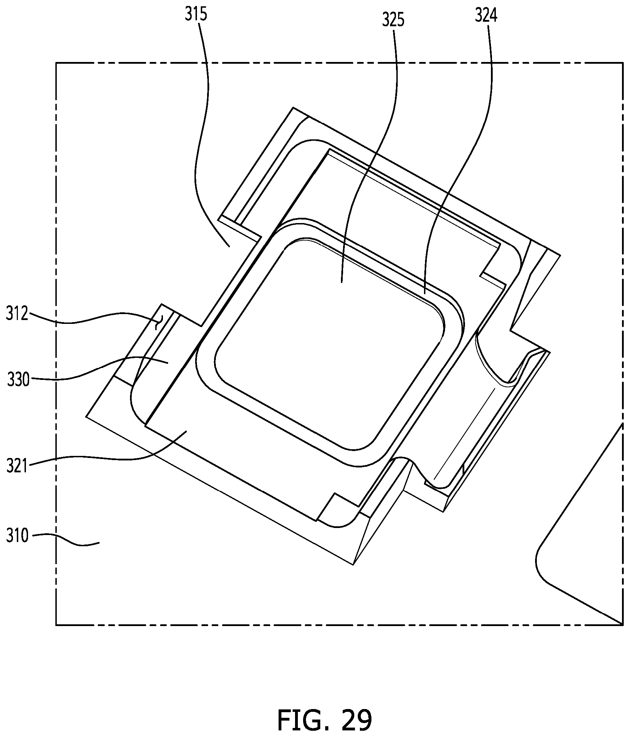

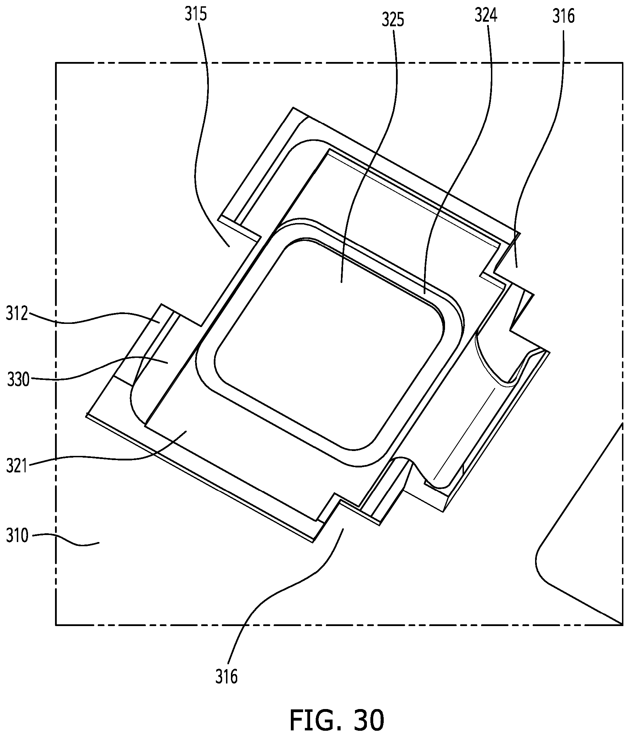

FIG. 29 is a rear perspective view illustrating an example in which a first stopper is provided on the busbar holder of the battery module according to some embodiments of the present disclosure, and FIG. 30 is a rear perspective view illustrating an example in which a second stopper is additionally provided.

With reference to FIGS. 27-30, the busbar holder 310 may further include a stopper protruding inward of the temperature-sensor receiving hole 312, the stopper seating the sensor fixing portion 330 thereon. The stopper may prevent the temperature-sensor coupling portion 321 from entering inside the temperature-sensor receiving hole 312 and drooping downward when the busbar holder 310 is separated from an upper side of the battery cell.

In some embodiments, the stopper may include a first stopper 315 protruding in a direction opposite to a direction in which the temperature-sensor coupling portion 321 extends from the flexible circuit board 320. The first stopper 315 may protrude inward of the temperature-sensor receiving hole 312 from a bottom surface of the busbar holder 310 and may be formed so as to face the direction opposite to the direction in which the temperature-sensor coupling portion 321 extends from the flexible circuit board 320. The first stopper 315 may protrude with a length that does not interfere with the metal tab 324 and the adhesive layer 325 provided on the temperature-sensor coupling portion 321. That is, the sensor fixing portion 330 may be seated on the first stopper 315.

In some embodiments, the stopper may further include a pair of second stoppers 316 protruding on both sides of the direction in which the temperature-sensor coupling portion 321 extends from the flexible circuit board 320. The pair of second stoppers 316 may be formed in a direction facing the first stopper 315 and may be formed to support corner portions of the sensor fixing portion 330.

Because the flexible circuit board 320 and the temperature-sensor coupling portion 321 are very thin, a portion where the flexible circuit board 320 and the temperature-sensor coupling portion 321 are connected may enter inside the temperature-sensor receiving hole 312. Accordingly, by further providing the pair of second stoppers 316, the sensor fixing portion 330 may be supported more stably.

A flexible circuit board used to sense a temperature and/or a voltage inside a battery module is attached by a fixed method that is not detachable. When the flexible circuit board is forcibly separated, traces remain, making it impossible to mount a new component in the same position. Accordingly, when a defect occurs in the flexible circuit board during an assembly process or damage such as a short circuit occurs due to external noise, only the flexible circuit board cannot be replaced, so reuse of the entire module is impossible. This leads to an increase in cost and a waste of resources in a secondary-battery manufacturing process.

According to some embodiments of the present disclosure, a battery module adopts a detachable structure between a flexible printed circuit board (FPCB) and a bus bar, enabling replacement of the FPCB with a new one in the event of a defect occurring during module assembly. This structure can prevent the problem of having to discard the entire module.

According to some embodiments of the present disclosure, the battery module includes a bendable portion that is elastically deformable at the coupling portion connecting the bus bar and the FPCB. This configuration allows absorption of assembly tolerances and external forces that may occur during use, thereby ensuring the reliability of the battery module.

According to some embodiments of the present disclosure, the battery module includes a gripping portion formed at the coupling portion of the FPCB, allowing a user to easily replace the FPCB without using a separate tool during the replacement process.

According to some embodiments of the present disclosure, the battery module adopts a detachable structure for a temperature sensor provided on the FPCB, which is installed on a bus bar holder. This allows the FPCB alone to be replaced in the event of a defect in the FPCB or the temperature sensor.

According to various aspects, the first coupling portion comprises one or more bent portions, preferably including a first bent portion (e.g., proximate the insertion portion) and/or a second bent portion (e.g., proximate the base portion). For example, the one or more bent portions provide a connection between the base portion and the insertion portion, which has a lower stiffness than a connection of the base portion to the flexible circuit board. Alternatively or additionally, each of the one or more bent portions has a lower stiffness than the base portion and/or the insertion portion. This increases reliability and robustness.

According to various aspects, one or more bent portions of the first coupling portion are curved, angled and/or meander shaped.

According to various aspects, one or more bent portions of the first coupling portion allow for an elastic displacement of insertion portion relative to the base portion, e.g., an elastic variation of a distance of insertion portion from the base portion and/or a lateral elastic displacement of insertion portion relative to the base portion.

According to various aspects, one or more bent portions of the first coupling portion are flexible.

According to various aspects, one or more bent portions of the first coupling portion differ from each other in an orientation and/or direction, in which they are bend.

According to various aspects, the first base portion is rigidly coupled to the flexible circuit board. Alternatively or additionally the second base portion is rigidly coupled to the busbar.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module (10), comprising:
a plurality of battery cells (100);
a busbar holder (310) on the plurality of battery cells (100);
a plurality of busbars (311) on the busbar holder (310), the plurality of busbars (311) electrically connecting the plurality of battery cells (100);
a flexible circuit board (320) on the busbar holder (310), the flexible circuit board (320) being electrically connected to the plurality of busbars (311);
a first coupling portion (400) on the flexible circuit board (320); and
a second coupling portion (600) on the busbar, the second coupling portion (600) being detachably coupled to the first coupling portion (400) and electrically connected with the first coupling portion (400).

2. The battery module (10) as claimed in claim 1, wherein the first coupling portion (400) comprises:
a first base portion (410) coupled to the flexible circuit board (320);
an insertion portion (430) extending from the first base portion (410), the insertion portion (430) being inserted into the second coupling portion (600) to be electrically connected to the second coupling portion (600); and
a first bridge portion (420) between the first base portion (410) and the insertion portion (430).

3. The battery module (10) as claimed in claim 2, wherein the first bridge portion (420) comprises:
a first bridge body (421) connected to the first base portion (410);
a gripping portion (422) extending from one side of the first bridge body (421), the gripping portion (422) being bent to protrude in a direction in which the insertion portion (430) is separated from the second coupling portion (600), the gripping portion (422) extending from the insertion portion (430); and
a support portion (423) extending from another side of the first bridge body (421), the support portion (423) being bent to protrude in a same direction as the gripping portion (422), coupled to the first bridge body (421), and supporting a side surface of the gripping portion (422).

4. The battery module (10) as claimed in claim 3, wherein the support portion (423) further comprises a coupling protrusion (423a) protruding from an end of the support portion (423), the coupling protrusion (423a) being inserted into and coupled to a coupling groove in the first bridge body (421).

5. The battery module (10) as claimed in claim 3 or 4, wherein the first coupling portion (400) further comprises a first bent portion (440) connecting the gripping portion (422) and the insertion portion (430), the first bent portion (440) being bent to protrude in a direction intersecting a direction in which the gripping portion (422) and the insertion portion (430) are connected.

6. The battery module (10) as claimed in one of claims 3 to 5, wherein the first coupling portion (400) further comprises a second bent portion (450) connecting the first bridge body (421) and the first base portion (410), the second bent portion (450) being bent to protrude in a direction intersecting a direction in which the first bridge body (421) and the first base portion (410) are connected.

7. The battery module (10) as claimed in claim 2, wherein the first bridge portion (520) comprises:
a first bridge body (521) connected to the first base portion (510); and
a gripping portion (522) extending from the first bridge body (521), the gripping portion (522) protruding in a direction in which the insertion portion (530) is separated from the second coupling portion (600).

8. The battery module (10) as claimed in claim 7, wherein the gripping portion (522) comprises:
a first bent portion (522a) extending from one side of the first bridge body (521), an end of the first bent portion (522a) being in the direction in which the insertion portion (530) is separated from the second coupling portion (600), and extending from the insertion portion (530); and
a second bent portion (522b) extending from another side of the first bridge body (521), the second bent portion (522b) being bent to protrude in a same direction as the first bent portion (522a), the end of the first bent portion (522a) coupled by wrapping the end of the first bent portion (522a).

9. The battery module (10) as claimed in claim 8, wherein the first coupling portion (500) further comprises a first bent portion (540) connecting the first bent portion (522a) of the gripping portion (522) and the insertion portion (530), the first bent portion (540) of the first coupling portion (500) being bent to protrude in a direction intersecting a direction in which the first bent portion (522a) of the gripping portion (522) and the insertion portion (430) are connected.

10. The battery module (10) as claimed in one of claims 1 to 9, wherein the second coupling portion (600) comprises:
a second base portion (610) coupled to the busbar (311);
a second bridge portion (620) extending from the second base portion (610) to be bent downward; and
a receiving portion (630) extending from the second bridge portion (620), the receiving portion (630) receiving the first coupling portion (400) and being electrically connected to the first coupling portion (400).

11. The battery module (10) as claimed in claim 10, wherein the receiving portion (630) comprises:
a receiving body (631) connected to the second bridge portion (620);
a first pressing portion (632) extending from one side of the receiving body (631) in a direction in which the first coupling portion (400) is separated and bent toward an inner side of the receiving body (631); and
a second pressing portion (633) extending from another side of the receiving body (631) in the direction in which the first coupling portion (400) is separated and bent to face the first pressing portion (632).

12. The battery module (10) as claimed in claim 11, wherein the receiving portion (630) further comprises:
a first protrusion (632a) protruding from the first pressing portion (632) toward the second pressing portion (633); and
a second protrusion (633a) protruding from the second pressing portion (633) toward the first pressing portion (632).

13. The battery module (10) as claimed in claim 11 or 12, wherein:
the first pressing portion (632) includes a first slit (632b) recessed in a direction intersecting a direction in which the receiving portion (630) extends from the second base portion (610), and
the second pressing portion (633) includes a second slit (633b) recessed in a direction intersecting the direction in which the receiving portion (630) extends from the second base portion (610).

14. The battery module (10) as claimed in one of claims 1 to 9, wherein the second coupling portion (800) comprises:
a second base portion (810) coupled to the busbar (311);
an insertion portion (820) extending from the second base portion (810), the insertion portion (820) being inserted into the first coupling portion (700) to be electrically connected to the first coupling portion (700); and
a support protrusion (830) extending from the second base portion (810), the support protrusion (830) being inserted into a support groove (824) in the insertion portion (820) to support the insertion portion (820).

15. The battery module (10) as claimed in one of claims 1 to 14, wherein the flexible circuit board (320) further comprises:
a temperature sensor (322) on the flexible circuit board (320), the temperature sensor (322) being inserted into a temperature-sensor receiving hole (312) through the busbar holder (310), the temperature sensor (322) being on a battery cell (100); and
a sensor fixing portion (330) coupled to the temperature-sensor receiving hole (312) to press and fix the temperature sensor (322) to the battery cell (100).
